# EUROPEAN PATENT APPLICATION

(11) **EP 2 676 544 A1**
(43) Date of publication of application: **25.12.2013**
(21) Application number: 12004692.5
(22) Date of filing: 22.06.2012
(51) Int. Cl.: A01K 13/00, A41D 19/00, A47L 13/18

(54) **Pet grooming glove**

(71) Applicant: Daily Life, LLC., Canfield OH 44406 (US)
(72) Inventor: Zavoral, Ernest, Canfield OH 44406 (US); Stathopoulos, Rose, Pickering Ontario L1V 6V8 (CA)
(74) Representative: GROSSE SCHUMACHER KNAUER VON HIRSCHHAUSEN

(57) **Abstract**

A glove that covers at least a portion of a hand is provided with a plurality of pliable nibs (14) protruding outwards from an outward facing side. Nozzles (16)are formed at the distal end of at least a number of the nibs and is in fluid communication with an interior volume that temporarily contains water which exits each nozzle. A water intake port (18) that receives a corresponding conduit (20) attachable to a conventional faucet. A forearm strap wraps (34) around a forearm and comprises a channel (32) across its length to secure the conduit. Water or water and shampoo can be distributed from the surface of the glove so that the cleanser can be delivered from the reservoir simultaneous with water to the pet's coat.

## Description

The present invention relates generally to a pet grooming apparatus and, more particularly, to a hand glove that directs water to a pet's coat through specially-designed rubberized washing nozzles as a user passes his or her hand over the pet's coat to lather and flush dirt and allergens from the pet's fur.

### BACKGROUND OF THE INVENTION

Just like humans, pets need regular baths to remove dirt, grime, and dander that can lead to skin irritation, unpleasant odors, and even infection. Certain allergies force pet owners to groom their pets quite frequently, as often as once a week. It can be a difficult and messy task to bathe a medium-to-large sized dog, when the owner must concentrate on relaxing the pet, and controlling the water supply, and removing soaps and conditioners. Water is wasted when owners bathe dogs at home because the dog's temperament must be settled as it is first wetted and when it is rinsed. One common problem is that of lathering, wherein the dog must be wetted repeatedly throughout shampooing to ensure that all areas are properly lathered. The present invention is a pet washing contrivance that alleviates steps in grooming, water wasted, and multitasking.

A search of the prior art reveals no patents that teach this invention, but the following ones are related references.

U.S. Patent 5,524,575 to Lennon teaches an "animal grooming glove" having a mitt body including a main pocket and a separate thumb pocket", wherein a soft rubber palm portion comprises teeth, bristles or undulations that pass over or through the animal's coat.

U.S. Patent 5,722,349 to Wolgamuth teaches an "ergonomic hand pet washing 20 system", wherein rubber tubing is secured to a resilient rubber glove, and a valve at the end of the tubing controls soap and water flow delivered from an in-line shampoo applicator.

U.S. Patent 5,441,335 to Moore teaches a "scrubber device with waterproof mitt", wherein a front part of a mitt is covered with cleaning media and a material dispenser comprising a reservoir. Soap is dispensed through outlet tubes when pressure is applied to the reservoir by the user's wrists.

U.S. Patent 5,169,251 to Davis teaches a "hand-worn dispenser", wherein a glove contains a palmer receptacle that dispenses grease, ointments, and shampoos, etc. from conduits at the fingers' tips.

U.S. Patent 5,682,837 to Courtney, et al., teaches a "pet brush worn on the hand", wherein a glove comprises a plurality of pads attached to its palm-side with pet brush bristles extending thereto.

U.S. Patent 6,968,808 to Claire teaches a "multi-textured pet washing glove", wherein a glove comprises a first scrubbing surface on one side and a second rubbing surface on the opposite side. A palm-side receptacle retains washing material.

U.S. Patents 6,109,214 and 6,834,619, both to Rampersad, teach a "pet grooming mitt with reservoir and medial concentric bristle patterns", wherein a rubber mitt has a built-in reservoir and discharge ports and massage-nibs for pet grooming.

There is a long-felt need for an improved pet washing apparatus that comprises a conduit that connects to a water source. The conduit delivers water to a pet's coat through massaging rubberized nozzles while the pet's groomer is lathering shampoo on it and directing water in the areas that need it.

### SUMMARY OF THE INVENTION

It is an object of the present invention to teach a pet grooming apparatus that simplifies the chore of washing an animal.

It is an object that the present invention makes the chore less timely.

It is an object that the present invention reduces wasted water.

It is an object that the present invention improves lathering of shampoo on pets being washed by means of maintaining a wet coat.

It is an object that the present invention aid in tempering a pet, wherein the groomer does not have to divert attention away from the pet to control water delivery; similarly, the groomer does not have to divert attention away from bathing to control the pet.

It is a foremost object that the groomer can maintain two hands on the pet at all times including during steps of wetting, lathering, and rinsing.

It is an object that will rinse the pets coat from the skin out thus making the dog cleaner and have less irritation to the pet.

It is envisioned that the present invention is a pet washing glove that provides for a deep down rinse continued, yet conservative, water supply. A sheath is secured to cover the anterior/palm side of a hand. The sheath is generally planar, but it comprises a certain volume. A plurality of rubberized massaging nozzles spaced throughout the sheath. A conduit attaches to the wrist portion of the palm, and it delivers water to the volume, which spurt from the nibs. The rubberized massaging nozzles furthermore are used to lather shampoo on the pet. The groomer is able to massage shampoo into the pet's coat while it is simultaneously wetted. The opposing distal end of the conduit attaches to a faucet, but a valve on the apparatus controls water flow. A further feature is a strap that attaches to the forearm to prevent erratic, obtrusive or disruptive movement of the conduit. The strap maintains that the conduit is not caught by the pet, so that it isn't inadvertently pulled from the faucet.

In summary, one non-limiting embodiment of the invention is directed to a sheath that covers at least a portion of a hand. The sheath includes a plurality of pliable nibs protruding outwards from an outward facing side of the sheath, nozzles at a distal end of one or more of the nibs, an interior volume or cavity that temporarily contains water which exits each nozzle, a water intake port that receives a corresponding conduit which can optionally be designed to attach to a conventional faucet, and a length of a first strap that wraps around a wrist of a user, wherein the first strap wraps around the wrist to secure a portion of the sheath to the wrist. The first strap can optionally be secured at the posterior side of the wrist. The sheath can optionally covers an entire palm of a hand from the fingers to the wrist. The water intake port can optionally be located across a width of the first strap. An entire adjacent length of the sheath can optionally be attached along corresponding length of the first strap. The sheath can optionally be attached to the first strap at only a point of the intake port. The sheath can optionally include a second strap for further securing the sheath to the hand, and wherein a length of the second strap affixes to an interior facing surface of the sheath so that it abuts a palm near fingers. The sheath can optionally include a plurality of claws that extend from the sheath and reach around crevices formed between fingers, and wherein the claws can optionally further maintain that the sheath stays properly positioned at the palm. The sheath can optionally include a third strap that wraps around a forearm. The sheath can optionally include means to secure ends of the first, the second, and the third straps is a protrusion on one distal end that snap-fits into one of a plurality of appropriate openings on an opposing distal end. The sheath can optionally include means to secure ends of the first, the second, and the third straps is a first layer of Velcro hooks on one distal end that press over a second layer of Velcro fasteners on an opposing distal end. The third strap can optionally include a channel across its length, and the conduit can optionally travels through the channel. The channel can optionally be closed. The channel can optionally be a partially open channel so the conduit can be removably pushed between slightly flexible walls where it is held in place by means of an interference fit. The sheath can optionally include a cross-strap perpendicular to both the first strap and the second strap proximate to the thumb, and wherein the cross strap, the first and the second straps, and the sheath combine to form a continuous wall that forms a window for the thumb to travel through. In another non-limiting embodiment of the invention, there is provided a glove that includes a textured, pliable surface that covers at least a portion of a hand, a plurality of nibs protruding outwards from an outward facing side of the glove, nozzles at a distal end of at least one of the nibs, an interior volume or cavity of the pliable surface or pliable strucure that temporarily contains water which exits each said nozzle, a water intake port that receives a corresponding conduit, and a length of a first strap that wraps around a wrist of a user. The conduit can optionally be connectable to a conventional faucet. The pliable surface or pliable structure can optionally cover an entire palm of a hand. The pliable surface can optionally cover an entire anterior side of a hand. The water intake port can optionally be comprised across a width of the first strap. The glove can optionally include a reservoir for containing a cleaner (e.g., solid and/or liquid cleanser) that is optionally positioned on the posterior side of the glove opposite the palm, and wherein the reservoir can optionally include an internal volume which may deliver the cleaner simultaneous to a delivery of water. The glove can optionally include a reservoir intake port on the exterior facing surface of the reservoir, and wherein the reservoir intake port can optionally include a door pivotally attached thereto so that it the internal volume is completely closed during washings. The glove can optionally include at least one reservoir conduit that travels away from the reservoir and also can optionally claws around a crevice of at least one finger. The glove can optionally include a nozzle at a distal tip of each of the reservoir conduits. The glove can optionally include a nozzle that faces the anterior surface of the glove so that the cleanser can be delivered from the reservoir. The reservoir can optionally be a balloon that displaces the liquid cleanser towards the reservoir conduits when it is depressed by a finger on the user's free hand. The glove can optionally include a second strap that wraps around a forearm. The glove can optionally include means to secure ends of each the first and the second straps, which means is a protrusion on one distal end that snap-fits into one of a plurality of appropriate openings on an opposing distal end. The glove can optionally include means to secure ends of each of the first strap and the second strap, which means is a first layer of Velcro hooks on one distal end that press over a second layer of Velcro fasteners on an opposing distal end. The second strap can optionally include a channel across its length, and wherein the conduit can optionally travel through the channel. The channel can optionally be closed. The channel can optionally be a partially open channel so the conduit can be removably pushed between slightly flexible walls where it is held in place by means of an interference fit.

### BRIEF DESCRIPTION OF THE DRAWINGS

Advantages and features of the present invention are better understood with reference to the following and more detailed description and claims taken in conjunction with the accompanying drawings, in which like elements are identified with like symbols, and in which:
FIG. 1 is a posterior view of a pet grooming glove according to a preferred embodiment of the present invention;
FIG. 2 is an anterior view of the glove shown in FIG. 1;
FIG. 3 is an anterior top-perspective view of a pet grooming glove according to a second preferred embodiment of the present invention;
FIG. 4 is a posterior bottom-perspective view of the second embodiment shown in FIG. 3;
FIG. 5 is a top plan view of a pet grooming glove according to a third preferred embodiment of the present invention;
FIG. 6 is a bottom plan view of the third embodiment shown in FIG. 5;

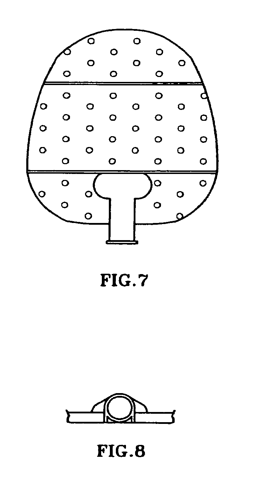

FIG. 7 is a partial plan detailed view of the a hinged manifold element used in accordance with the pet grooming glove of FIG. 5-6;
FIG. 8 is a partial elevational view of the hinged manifold element of FIG. 7; and
FIG. 9 is a photograph of an entire kit for grooming pets incorporating a pet grooming glove of the present invention.

### DESCRIPTION OF THE PREFERRED EMBODIMENTS

The best mode for carrying out the invention is presented in terms of its preferred embodiment, herein depicted within the Figures.

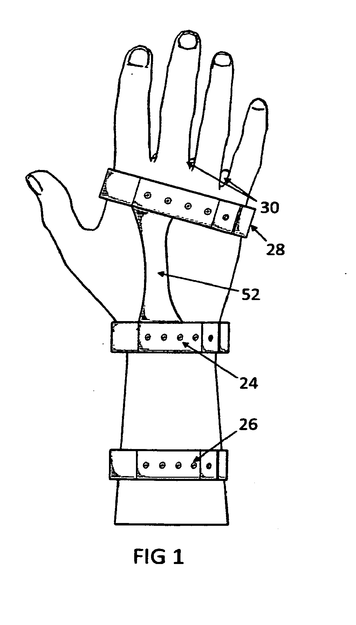

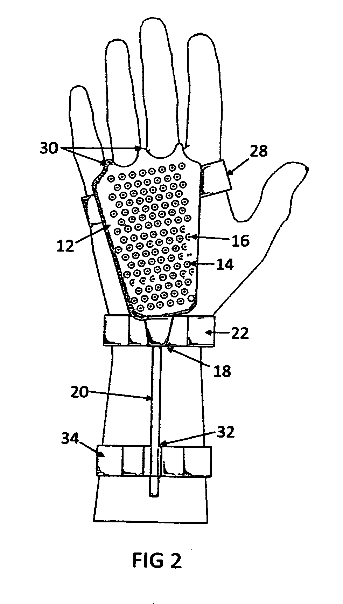

A first preferred embodiment of the pet grooming glove (hereinafter "glove 10) is shown in FIG. 1-2 according to the present invention. The glove namely comprises a sheath 12 that covers an entire palm-side of a hand from the fingers to the wrist. An anterior view of the hand is shown in FIG. 2, wherein a plurality of rubberized massaging nibs 14 protrudes outwards from the outward facing side of the sheath 12. The nibs 14 provide the glove 10 with a textured surface so that soap can be lathered easier throughout a pet's coat. At a distal end of at least a portion of the nibs 14 are nozzles 16 formed as fluid conduits there through that deliver water to the coat and massage.

The sheath 12 further forms a closed body that comprises a fluid bladder and distribution manifold having an interior volume. The interior volume temporarily contains, and distributes the water which exits each nozzle 16. Water is delivered to the interior volume by means of a water intake port 18 that receives corresponding conduit which attaches to a conventional faucet and can be adapted for a garden hose or shower. The water intake port 18 is comprised across a length of a first strap 22 that wraps around the wrist of the groomer. As shown herein in the first preferred embodiment, the entire adjacent length of the sheath 12 is attached along the corresponding length of the strap (see FIG. 1); however, the sheath may attach to the first strap at only the point of the intake port. The first strap 22 wraps around the wrist and secures at the posterior side. The means to secure the ends of the strap is not limited to anyone method: a protrusion 24 on one distal end can snap-fit into one of a plurality of appropriate openings 26 on the opposing distal end (see FIG. 2); a first layer of Velcro (hooks) on one distal end can press over a second layer of Velcro (fasteners) on the opposing distal end (FIG. 1).

A second strap 28 further secures the glove 10 to the hand. A length of the second strap 28 is affixed to the interior facing surface of the sheath 12 so that it abuts the palm near the fingers. The second strap 28 also wraps around the hand so that the sheath 12 is secured to the entire palm. A plurality of claws 30 extend from the sheath 12 and reach around the crevices formed between the forefinger and the middle finger, the middle finger and the ring finger, and the ring finger and the pinky finger. The claws 30 further maintain that the sheath 12 stay properly positioned at the palm.

The conduit 20 travels through a channel 32 formed across a length of a third strap 34 which wraps around the forearm. The channel may be completely closed (see FIG. 2) or it may be partially open (FIG. 1). An advantage to a partially open channel is that the conduit can be removably pushed between slightly flexible walls 36, where it is held in place by means of an interference fit. The third strap 34 maintains that the conduit 20 is not caught by the pet, so that it isn't inadvertently pulled from the faucet. The third strap 34 attaches to the forearm to prevent erratic, obtrusive or disruptive movement of the conduit 20. A cross-strap 52 is perpendicular to both the first strap 22 and the second strap 28 proximate to the thumb. The cross strap 52, the first and second straps 22, 28, and the sheath 14 combine to form a continuous wall that forms a window for the thumb to travel through.

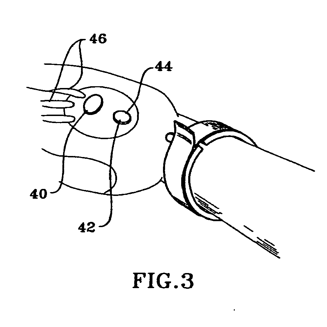

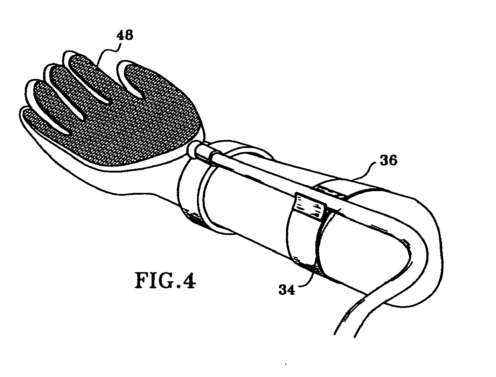

A second preferred embodiment of the present invention is shown in FIGS. 3 and 4. This embodiment comprises a glove which completely covers the entire surfaces of the hand, or at least a substantial portion thereof. A textured surface 38 is affixed to the entire anterior side of the hand, including the palm, the fingers and the thumb. The glove may comprise features similar to the first preferred embodiment, such as, for example, nibs with nozzles, an interior volume, an intake port, a conduit, a third strap, etc. An additional feature on this embodiment is a reservoir 40 for containing a shampoo, a cleanser, etc. The reservoir 40 is comprised on the posterior side of the glove opposite the palm. The reservoir 40 comprises an internal volume which may deliver shampoos and cleaners simultaneous to the delivery of water. A reservoir intake port 42 is comprised on the exterior facing surface of the reservoir 40. The reservoir intake port 42 comprises a door 44 pivotally attached thereto so that it the internal volume is completely closed during washings. At least one reservoir conduit 46 travels away from the reservoir and claws around the crevice of at least one finger. A nozzle 48 at the distal tip of the reservoir conduit 46 faces the anterior surface of the glove so that cleanser can be delivered from the reservoir 40 to the pet while it is getting lathered. It is anticipated that the reservoir is a balloon that displaces the liquid cleanser towards the reservoir conduit(s) 46 when it is depressed by a finger on the groomer's free hand.

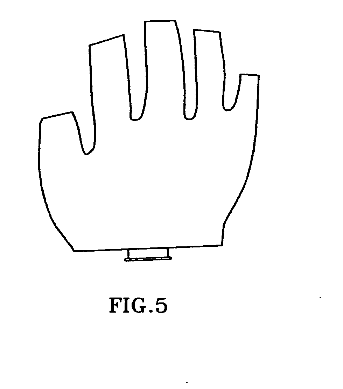

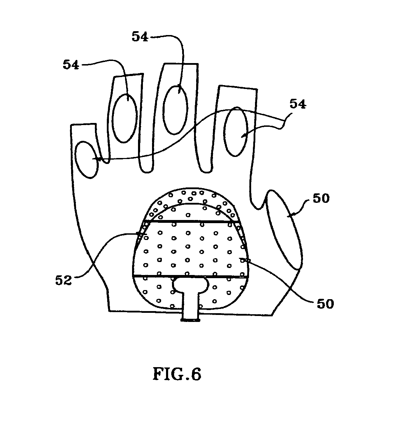

A third preferred embodiment of the present invention is shown in FIG. 5 and FIG. 6. The third preferred embodiment comprises a glove-like sheath that generally covers the anterior and posterior surfaces of the hand except for the tips of the fingers. The sheath is a glove-like generally tubular body having a window 50 formed therethrough to receive the thumb. The sheath wraps around the hand in an ambidextrous fashion, and opposing hooks-and-fasteners on both opposite sides and opposite surfaces securely fasten the sheath to the hand at its posterior.

It is anticipated that the present invention may further comprise other features, such as, for example, bristles that protrude between the nibs 14, a valve to control water flow more proximate to the glove, etc. In such an embodiment other features are shown and taught that could be used in combination with the previous embodiments, such as a hinged manifold element 52 through which fluid is communicated to the rubberized massaging nozzles 14. Further still, rubberized ellipse shaped massaging elements 54 located opposite the user's knuckles at the joint of the finger allows for placement of scrubbing pressure optimally at the location to provide the best scrubbing during use as described below.

### Operation of the Preferred Embodiment

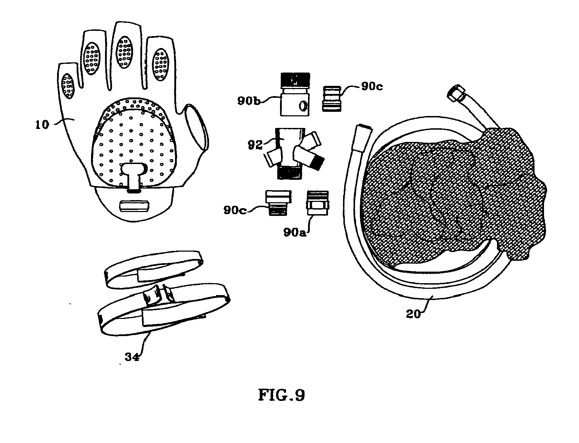

The operation of the preferred embodiment is best shown in conjunction with FIG. 9 in which a pet grooming glove 10 is provided in conjunction with straps 34, tubing or hose 20, connection fittings 90 for attachment to various water sources such as a garden hose 90a, a threaded exterior faucet fitting 90b, or quick connect couplings 90c. Further, a mixing valve 92 is provided to allow for shutting the water flow on or off as well as drawing in a flow of liquid cleaner or shampoo through a venture type of mixing mechanism. With such a kit the groomer is able to massage shampoo into the pet's coat while it is simultaneously wetted. It is anticipated that a dog is placed in a stationary tub, i.e., in a garage or in a laundry, and the conduit is attached to the faucet head. The water is turned on to a comfortable temperature and it begins to spray away from the nibs on the sheath. The groomer runs his or her hands through the pet's coat to wet it. The groomer applies shampoo via his free hand or the reservoir conduit. As he lathers the shampoo with the nibs, the groomer can continue to wet the coat or cease the water supply. The wet coat enables better lathering because it keeps the hair well-wetted while the groomer massages the coat.

It is anticipated that the present teachings are not limited to grooming uses; rather, the pet glove and all its features can be used for home spa systems and for carwash uses. The reservoir can be filled with liquid cleaners while a soft, pliable sheath and nibs gentle urge away any dirt. Another possible application is for the glove is for washing dishes, wherein dish soap is used in the reservoir and the soft, pliable sheath is used to gently urge stuck-on food.

The foregoing descriptions of the specific embodiments of the present invention have been presented for the purposes of illustration and description. They are neither intended to be exhaustive nor to limit the invention to the precise forms disclosed and obviously, many modifications and variations are possible in light of the above teachings. The embodiments were chosen and described in order to best explain the principles of the invention and its practical application, to thereby enable others skilled in the art to best utilize the invention and its various embodiments with various modifications as are suited to the particular use contemplated. It is intended that the scope of the invention be defined by the Claims appended hereto and to their equivalents. Therefore, the scope of the invention is to be limited only by the following claims.

## Claims

1. A sheath (12) that covers at least a portion of a hand or optionally the entire palm of the hand from the fingers to the wrist, comprising:
a plurality of pliable nibs (14) protruding outwards from an outward facing side of said sheath (12);
nozzles (16) at a distal end of at least one said nibs (14);
an interior volume or cavity that temporarily contains water, said interior volume or cavity is fluidly connected to at least one of said nozzle (16) on said nib (14);
a water intake port (18) that receives a corresponding conduit, said conduit adapted to connect to a water source, such as a conventional faucet;
a length of a first strap (22) that wraps around a wrist of a user, said first strap (22) wraps around a wrist and secures a portion of said sheath (12) to the wrist, and optionally an entire adjacent length of said sheath (12) is attached along corresponding length of said first strap (22), and optionally the first strap (22) is secured at the posterior side of the wrist.

2. The sheath of claim 1, further comprising a second strap (28) further securing said sheath (12) to the hand, wherein a length of said second strap (28) affixes to an interior facing surface of said sheath (12) so that it abuts a palm near the fingers.

3. The sheath of claim 1 or 2, further comprising a plurality of claws (30) that extend from said sheath (12) and reach around crevices formed between the fingers, said claws (30) further facilitate in maintaining said sheath (12) in the proper positioned at the palm.

4. The sheath of claims 1-3, further comprising a third strap (34) that wraps around a forearm.

5. The sheath of claim 4, wherein means to secure ends of said first, said second, and said third straps (22, 28, 34) is a protrusion (24) on one distal end that snap-fits into one of a plurality of appropriate openings (26) on an opposing distal end.

6. The sheath of claim 4, wherein means to secure ends of said first, said second, and said third straps (22, 28, 34) is a first layer of Velcro hooks on one distal end that press over a second layer of Velcro fasteners on an opposing distal end.

7. The sheath of one of the claims 4-6, wherein said third strap (34) comprises a channel (32) across its length, said conduit (20) travels through said channel.

8. The sheath of claim 7, wherein said channel (32) is a partially open channel so said conduit (20) can be removably pushed between slightly flexible walls (36) where it is held in place by means of an interference fit.

9. The sheath of one of the claims 4-8, further comprising a cross-strap (52) perpendicular to both said first strap (22) and said second strap (28) proximate to the thumb, said cross strap (52), said first and said second straps (22, 28), and said sheath (12) combine to form a continuous wall that forms a window for the thumb to travel through.

10. A glove (10) in accordance with claims 1-9, wherein said sheath (12) form a part of the glove (10), said glove (10) comprising,
a textured, pliable surface that covers at least a portion of a hand, and preferably said pliable surface covers an entire palm of a hand;
a plurality of nibs (14) protruding outwards from an outward facing side of said glove (10);
a nozzle (16) at a distal end of at least one of said nibs (14);
an interior volume or cavity form of a pliable structure that temporarily contains water, said interior volume or cavity is fluidly connected to at least one of said nozzle (16) on said nib (14);
a water intake port (18) that receives a corresponding conduit (20), said conduit (20) adapted to connect to a water source, such as a conventional faucet;
a length of a first strap (22) that wraps around a wrist of a user.

11. The glove of claim 11, wherein said pliable structure is at least partially positioned on an anterior side of a hand, and preferably fully positioned on said anterior side of a hand.

12. The glove of claim 10 or 11, further comprising a reservoir for containing a cleanser, and reservoir preferably positioned on the posterior side of said glove (10) opposite the palm, said reservoir includes an internal volume which may deliver the cleaner simultaneous to a delivery of water through the nozzles (16).

13. The glove of one of the claims 10-12, further comprising a reservoir intake port on the exterior facing surface of the reservoir, said reservoir intake port includes a door pivotally attached thereto so that the internal volume is completely closed during washings.

14. The glove of one of the claims 10-13, further comprising at least one reservoir conduit that travels away from said reservoir and claws around a crevice of at least one finger; and a nozzle at a distal tip of each of said reservoir conduits, said nozzle faces the anterior surface of said glove so that the cleanser can be delivered from the reservoir.

15. The glove of claim 14, wherein said reservoir is a balloon that displaces the liquid cleanser towards said reservoir conduits when it is depressed by a finger on the user's free hand.
